# EUROPÄISCHE PATENTSCHRIFT

(11) **EP 2 708 311 B1**
(45) Veröffentlichungstag und Bekanntmachung des Hinweises auf die Patenterteilung: **30.12.2015**
(21) Anmeldenummer: 12184684.4
(22) Anmeldetag: 17.09.2012
(51) Int. Cl.: B23Q 1/00, B23Q 11/00, B23Q 11/10, B23B 29/24

(54) **Revolverkopf mit Hochdruckpumpe für eine Drehmaschine**
Revolver head with high-pressure pump for a lathe
Tourelle revolver avec pompe à haute pression pour un tour

(43) Veröffentlichungstag der Anmeldung: 19.03.2014
(73) Patentinhaber: MSR Technologies GmbH, 88471 Laupheim (DE)
(72) Erfinder: Hartwich, Waldemar, 88471 Laupheim (DE); Cieslik, Adam, 88400 Biberach (DE)
(74) Vertreter: Durm & Partner

(56) Entgegenhaltungen:
- WO-A1-2008/106676
- DE-A1- 3 414 357
- FR-A1- 2 556 254
- GB-A- 897 606
- JP-A- 3 092 244

## Beschreibung

Die vorliegende Erfindung betrifft ein Hochdrucksystem nach dem Oberbegriff des Anspruchs 1 (siehe, z.B. JP-03092244) für einen Revolverkopf für eine Drehmaschine umfassend mehrere Werkzeugplätze, ein Maschinenelement zur Bearbeitung eines Werkstücks und eine Hochdruckpumpe zum Bereitstellen von Kühlmittel.

Die Bearbeitung von Werkstücken mit Hilfe von vollautomatisierten Werkzeugmaschinen, wie beispielsweise CNC-Werkzeugmaschinen, ist heutzutage Stand der Technik. Eine Werkstückbearbeitung erfordert oft mehre aufeinanderfolgende Bearbeitungsschritte mit unterschiedlichen Werkzeugen. Um einen Werkzeugwechsel zu automatisieren, kommen Revolverköpfe zum Einsatz, an denen gleichzeitig mehrere unterschiedliche Werkzeuge montiert werden können. Ein Werkzeugwechsel zwischen den einzelnen Bearbeitungsschritten erfolgt dann durch Rotation des Revolverkopfes relativ zum Werkstück. Revolverköpfe weisen den Vorteil auf, dass sie einen vollautomatisierten Werkzeugwechsel in sehr kurzer Zeit ermöglichen. Dies führt zu einer Verringerung der für eine vollständige Bearbeitung eines Werkstücks benötigten Zeit.

Revolverköpfe kommen u.a. bei spanenden Bearbeitungsverfahren, beispielsweise beim Drehen und Fräsen, zum Einsatz. Bei beiden Bearbeitungsverfahren werden Schneidwerkzeuge verwendet, die überflüssiges Material mittels Werkzeugschneiden in Form von Spänen vom Werkstück abtragen.

Während der Bearbeitung erwärmen sich die Werkzeuge stark, weshalb diese zur Minimierung des Verschleißes mithilfe von Kühlmittel gekühlt werden. Hierzu wird das Kühlmittel mittels einer Pumpe aus einem Reservoir über den Revolverkopf zu den auf dem Revolverkopf montierten Werkzeugen gefördert. Als Kühlmittel wird beispielsweise bekanntes wassermischbares Kühlschmiermittel verwendet. Bei heutigen CNC-Werkzeugmaschinen erfolgt die Kühlung mit einem Druck von ca. 20 bar.

Es ist bekannt, dass durch das Kühlen der Werkzeugschneiden unter Verwendung hoher Kühlmitteldrücke verschiedene prozessspezifische Vorteile erzielt werden. Beispielsweise wird der Werkzeugverschleiß aufgrund der höheren Kühlmittelmenge minimiert, während sich gleichzeitig die Prozesssicherheit erhöht. Das mit hohem Druck geförderte Kühlmittel bricht die bei der Werkstückbearbeitung entstehenden Späne in kurze Späne, die leicht aus der Werkzeugmaschine abtransportiert werden können.

Im Rahmen der vorliegenden Erfindung werden unter dem Begriff "hohe Drücke" Kühlmitteldrücke über ca. 40 bar verstanden. Drücke zwischen 1 bar und 40 bar, einschließlich der beiden Endpunkte des Wertebereichs, werden im Rahmen der vorliegenden Erfindung als "normale Drücke" bezeichnet.

Das Kühlen von Schneidwerkzeugen unter Verwendung von hohen Kühlmitteldrücken erfordert eine Hochdruckpumpe, mittels der das Kühlmittel aus einem Reservoir über den Revolverkopf zu den Schneidwerkzeugen gefördert wird. Bei heutigen Werkzeugmaschinen ist eine zentrale Pumpe zur Förderung des Kühlmittels vorgesehen. Dies bedeutet, dass sich der Käufer einer solchen Werkzeugmaschine vor dem Kauf entscheiden muss, ob er mit hohen Kühlmitteldrücken arbeiten will und die Werkzeugmaschine daher mit einer Hochdruckpumpe ausgestattet ist. Ein späteres Nachrüsten einer integrierten Hochdruckpumpe ist nur mit hohem Aufwand möglich. Sowohl die Niederdruckpumpe als auch die bestehenden Kühlmittelleitungen, die Kühlmittel mit hohem Druck leiten sollen, müssten ausgetauscht werden.

Anstatt die bestehende Pumpe auszutauschen, könnte auch eine zusätzliche Hochdruckpumpe extern, also außerhalb des Maschinengehäuses, angeordnet werden. Allerdings wäre hierfür nicht nur die zusätzliche Hochdruckpumpe, sondern auch ein zusätzliches Hochdruckleitungssystem und ein weiterer Pumpenantrieb inklusive Steuerung zum Antreiben der Hochdruckpumpe notwendig.

Aus oben genannten Gründen ergibt sich die Aufgabe, ein Hochdrucksystem für einen Revolverkopf bereitzustellen, bei dem eine Werkzeugkühlung, die ein Kühlen mit hohen Kühlmitteldrücken ermöglicht, kostengünstig und einfach nachgerüstet werden kann.

Gelöst wird die vorliegende Aufgabe durch ein Hochdrucksystem mit den Merkmalen des Anspruchs 1.

Das Hochdrucksystem umfasst eine Hochdruckpumpe zum Bereitstellen von Kühlmittel und einen Grundhalter zur Befestigung der Hochdruckpumpe an einem Werkzeugplatz eines erfindungsgemäßen Revolverkopfs. Die Hochdruckpumpe ist derart ausgebildet, dass sie mit einem Antrieb an dem Werkzeugplatz verbindbar ist. Das Hochdrucksystem ist an bereits vorhandenen Werkzeugmaschinen mit Revolverkopf einfach nachrüstbar, sodass auch hier die Vorteile hoher Kühlmitteldrücke ausgenutzt werden können. Das Hochdrucksystem kann beispielsweise als Nachrüst-Kit angeboten werden. Es ist möglich, das Hochdrucksystem platzsparend an einem Werkzeugplatz eines Revolverkopfs anzuordnen. Darüber hinaus kann der an dem Werkzeugplatz vorhandene Antrieb zum Antrieb der Hochdruckpumpe verwendet werden.

Der erfindungsgemäße Revolverkopf für eine Drehmaschine umfasst mehrere Werkzeugplätze. Jedem Werkzeugplatz ist ein Antrieb zugeordnet, durch den ein auf dem Werkzeugplatz montiertes Werkzeug, wie beispielsweise ein Bohrer oder ein Fräswerkzeug, antreibbar ist. Der Revolverkopf umfasst weiter ein Maschinenelement zur Bearbeitung eines Werkstücks, wobei das Maschinenelement über einen Grundhalter an einem Werkzeugplatz befestigt und relativ zu dem Revolverkopf unbeweglich ist. Darüber hinaus weist der Revolverkopf eine Hochdruckpumpe zum Bereitstellen von Kühlmittel für das Maschinenelement auf. Der Antrieb des dem Maschinenelement zugeordneten Werkzeugplatzes ist zum Antreiben der Hochdruckpumpe mit dieser verbunden.

Im Rahmen der Erfindung wird unter dem Begriff "Drehmaschine" eine Werkzeugmaschine verstanden, die eine Drehspindel mit einem Spanfutter zum Einspannen von Werkstücken oder zumindest eine Aufnahme für ein Spannfutter und einen Revolverkopf mit angetriebenen Werkzeugplätzen aufweist. Folglich fallen unter den Begriff "Drehmaschinen" u.a. CNC-Drehmaschinen wie auch Werkzeugmaschinen, bei denen eine Drehmaschine mit einer Fräsmaschine zu einer Dreh-/Fräsmaschine (Dreh-/Fräszentrum) kombiniert ist.

Unter dem Begriff "Bearbeitung eines Werkstücks" werden im Rahmen der vorliegenden Erfindung nicht nur werkstückverändernde Tätigkeiten, wie beispielsweise Drehen, Fräsen, Bohren, etc. verstanden, sondern auch Tätigkeiten, die zum Reinigen des Werkstück oder zur Vorbereitung des Werkstücks auf nachfolgende Fertigungsschritte dienen. Unter solche Reinigungstätigkeiten und vorbereitende Tätigkeiten fallen beispielsweise das Freispülen von Inneneinstichen oder das Freispülen von tiefen Bohrungen etwa zum Entfernen von Spänen.

Das Maschinenelement ist relativ zu dem Revolverkopf unbeweglich. Werkzeuge wie beispielsweise Fräser und Bohrer, die sich um ihre Längsachse relativ zu dem Revolverkopf drehen, gehören also nicht zu den Maschinenelementen, die relativ zu dem Revolverkopf unbeweglich sind.

Bei relativ zu dem Revolverkopf unbeweglichen Maschinenelementen wird der am Werkzeugplatz des Maschinenelements vorgesehene Antrieb nicht benötigt. Die Maschinenelemente sind nämlich beispielsweise über den Grundhalter starr an dem Werkzeugplatz des Revolverkopfs befestigt und können nicht angetrieben werden.

Der Antrieb am Werkzeugplatz des Maschinenelements kann mit hohen Drehzahlen betrieben werden. Damit eignet er sich besonders gut als Antrieb für eine Hochdruckpumpe. Aufgrund der hohen Drehzahlen lassen sich einfach hohe Drücke einstellen. Darüber hinaus kann der Antrieb über eine bereits vorhandene Steuerung einfach bedient werden. Eine Verbindung dieses Antriebs mit einer Hochdruckpumpe ermöglicht eine einfache Integration der Hochdruckpumpe in ein bestehendes Antriebssystem einer Werkzeugmaschine. Ein zusätzlicher Antrieb, der ausschließlich zum Antreiben der Hochdruckpumpe bestimmt ist, wird nicht benötigt. Ein Bediener, der mit der bisherigen Steuerung des Antriebs vertraut ist, muss nicht geschult werden, um die Hochdruckpumpe zu verwenden.

Im Rahmen der Erfindung wurde erkannt, dass die Hochdruckpumpe an dem erfindungsgemäßen Revolverkopf nicht nur zum Kühlen von beispielsweise Schneidwerkzeugen verwendet werden kann. Es ist ebenfalls möglich, das durch die Hochdruckpumpe geförderte Kühlmittel, als Kühlmittelstrahl zur Bearbeitung von Werkstücken einzusetzen.

Bei der Verwendung eins Drehwerkzeugs führt das Werkstück eine rotatorische Bewegung aus, während das Werkzeug entlang des Werkstücks oder radial zu diesem bewegt wird und dabei Material in Form von Spänen vom Werkstück abträgt. Beispielsweise erfolgt die Werkzeugbewegung durch

Stellmotoren, die den Revolverkopf und damit auch das Werkzeug relativ zum Werkstück bewegen. Bei der drehenden Bearbeitung erwärmt sich das Drehwerkzeug stark und wird durch das mittels der Hochdruckpumpe geförderte Kühlmittel gekühlt.

In einer bevorzugten Ausführungsform ist der Antrieb des dem Maschinenelement zugeordneten Werkzeugplatzes über eine Adapterwelle mit der Hochdruckpumpe verbunden. Mittels der Adapterwelle ist ein Verbinden der Hochdruckpumpe mit den Antrieben unterschiedlicher Werkzeugaufnahmen möglich. Beispielsweise kann die Hochdruckpumpe mit dem bei einer standardisierten VDI-Aufnahme (Verein Deutscher Ingenieure) oder einer BMT-Aufnahme (Base Mount Tooling) vorgesehenen Antrieb verbunden werden.

Bevorzugt ist die Hochdruckpumpe an dem Werkzeugplatz des Maschinenelements angeordnet. Die Hochdruckpumpe kann platzsparend direkt am Werkzeugplatz des Maschinenelements angeordnet werden. Ist der Werkzeugplatz beispielsweise als VDI- oder BMT-Aufnahme ausgebildet, ist eine einfache und schnelle Montage der Hochdruckpumpe möglich. Mehrere identische Aufnahmen an einem Revolverkopf ermöglichen mehrere Montagepositionen der Hochdruckpumpe am Revolverkopf.

Vorteilhafterweise ist die Hochdruckpumpe in einer Aussparung des Grundhalters angeordnet. Die Aussparung ist auf die Außenabmessungen der Hochdruckpumpe abgestimmt, sodass diese in der Aussparung platziert werden kann und durch den Grundhalter hindurchragt. Beispielsweise ist der Grundhalter zum Halten des Drehwerkzeugs auf dem Werkzeugplatz angeordnet und die Aussparung als Bohrung ausgebildet. Die Hochdruckpumpe ist in der Bohrung angeordnet und ragt durch den Grundhalter hindurch in eine Versenkung des Werkzeugplatzes. Die Befestigung der Hochdruckpumpe kann beispielsweise am Grundhalter oder direkt am Werkzeugplatz erfolgen. Schrauben, Stifte oder Gewindebolzen sind beispielsweise hierfür geeignete Befestigungsmittel.

In einer bevorzugten Ausführungsform weist der dem Maschinenelement zugeordnete Werkzeugplatz eine Kühlmittelzufuhr auf, die mit einem Pumpeneingang der Hochdruckpumpe verbunden ist. Folglich kann die Hochdruckpumpe an die bestehende Kühlmittelversorgung angeschlossen werden. Es ist keine aufwändige Verlegung von zusätzlichen Kühlmittelleitungen zwischen dem bestehenden Kühlmittelsystem und dem Pumpeneingang der Hochdruckpumpe notwendig. Das Kühlmittel wird aus einem Reservoir über die bestehende Kühlmittelzufuhr zum Werkzeugplatz gefördert. Dies geschieht mithilfe der standardmäßig vorgesehenen und mit normalen Drücken arbeitenden Kühlmittelpumpe. Eine an die bestehende Kühlmittelzufuhr angeschlossenen Niederdruckleitung kann dann das Kühlmittel vom Werkzeugplatz zum Pumpeneingang der Hochdruckpumpe leiten. Beispielsweise wird das Kühlmittel über die bestehende Kühlmittelzufuhr mit einem Kühlmitteldruck zwischen 10 bar und 30 bar, bevorzugt mit einem Druck von ca. 20 bar zum Werkzeugplatz des Revolverkopfs gefördert.

In einer bevorzugten Ausführungsform ist ein Pumpenausgang der Hochdruckpumpe mit einer Hochdruckleitung verbunden. Diese ist besonders bevorzugt, damit Kühlmittel unter hohem Druck an seinen Bestimmungsort geleitet werden kann. Die Hockdruckleitung kann als druckfester Schlauch, als Rohr oder als sonstige Leitung, die geeignet ist, hohe Drücke zu leiten, ausgebildet sein. Beispielsweise fördert die Hochdruckpumpe Kühlmittel mit einem Kühlmitteldruck von mindestens 40 bar, bevorzugt von mindestens 60 bar, besonders bevorzugt von mindestens 80 bar, weiter bevorzugt von mindestens 100 bar, weiter bevorzugt von mindestens 160 bar. Das Kühlmittel kann zu dem Maschinenelement geleitet werden. Ist die Hochdruckpumpe beispielsweise an dem Werkzeugplatz des Maschinenelements angeordnet, reicht eine kurze Hochdruckleitung aus, um das Kühlmittel von dem Pumpenausgang zu dem Maschinenelement zu führen. Dies ist kostengünstig und senkt die Fehleranfälligkeit des Hochdruckleitungssystems.

Im Rahmen der Erfindung wurde festgestellt, dass die Effizienz der Schneidwerkzeugkühlung gesteigert werden kann, wenn das dem Pumpenausgang der Hochdruckpumpe abgewandte Ende der Hochdruckleitung mit Düsen verbunden ist. Mittels der Düsen wird das Schneidwerkzeug mit Kühlmittel besprüht und dadurch abgekühlt. Die Düsen ermöglichen, dass das Kühlmittel gezielt und direkt auf die zu kühlende Schneidplatte gerichtet werden kann. Darüber hinaus ist es mittels der Düsen möglich, den Kühlmittelstrahl derart zu lenken, dass dieser die durch das Schneidwerkzeug abgetragenen Späne bricht. Abhängig von dem Querschnitt der Düsenöffnungen ist beispielsweise bei einem Kühlmitteldruck von ca. 70 bar eine Durchflussrate zwischen 5,4 und 23,5 l/min, bevorzugt zwischen 10 und 20 l/min vorgesehen. Es versteht sich, dass auch anstelle der Düsen andere Austrittsöffnungen vorgesehen sein können, mit denen das Kühlmittel in Richtung der zu kühlenden Werkzeuge geleitet werden kann.

Vorteilhafterweise erfolgt die Leistungsregelung der Hochdruckpumpe über eine Drehzahlregelung des Antriebs, der dem Werkzeugplatz des Maschinenelements zugeordnet ist. Folglich kann die Pumpenleistung und damit die durch die Hochdruckpumpe geförderte Menge an Kühlmittel über die Drehzahl des Antriebs eingestellt werden. Eine zusätzliche Einrichtung, die ausschließlich der Regelung der Pumpenleistung dient, wird nicht benötigt.

Ebenfalls in den Rahmen der Erfindung fällt eine Drehmaschine mit einem erfindungsgemäßen Revolverkopf. Der Revolverkopf kann in handelsübliche CNC-Drehmaschinen oder kombinierte Dreh-/Fräsmaschinen integriert werden, um eine vollautomatische Bearbeitung eines Werkstücks in mehreren Bearbeitungsschritten zu ermöglich.

Eine Weiterbildung der erfindungsgemäßen Drehmaschine umfasst eine Maschinensteuerung zur Regelung des Antriebs jedes Werkzeugplatzes. Die Drehmaschine hat beispielsweise eine zentrale Antriebseinheit und einen einzigen Antrieb, der mit der zentralen Antriebseinheit verbunden ist. Dieser Antrieb ist ortsfest an der Drehmaschine angeordnet, während der Revolverkopf mit den Werkzeugplätzen und den daran befestigten Werkzeugen relativ zu dem Antrieb rotieren kann. Beispielsweise ist für einen ersten Bearbeitungsschritt ein erstes Werkzeug auf einem ersten Werkzeugplatz zur Bearbeitung eines Wertstücks ausgewählt und mit dem Antrieb verbunden. Erfolgt für einen zweiten Bearbeitungsschritt ein Werkzeugwechsel wird der Antrieb von dem ersten Werkzeug automatisch entkoppelt. Der Revolverkopf rotiert relativ zu dem Antrieb bis sich ein zweites Werkzeug an einem zweiten Werkzeugplatz über dem ortsfesten Antrieb befindet. Eine Kopplung des zweiten Werkzeugs mit dem Antrieb erfolgt dann ebenfalls wieder automatisch. Mittels der Maschinensteuerung ist die Drehzahl der zentralen Antriebseinheit und damit auch die Drehzahl des Antriebs regelbar, der mit dem für die Werkstückbearbeitung ausgewählten Werkzeug gekoppelt ist. Ist der Antrieb mit der Hochdruckpumpe verbunden, dient die Maschinensteuerung zum Einstellen der Pumpenleistung der Hochdruckpumpe. Es sind keine weiteren kostenintensiven Steuerungen zur Regelung der Hochdruckpumpe notwendig.

Besonders bevorzugt ist bei einer Weiterbildung der erfindungsgemäßen Drehmaschine ein rotierbares Spannfutter zum Einspannen und Drehen eines Werkstücks vorgesehen. Der Revolverkopf umfasst ein nicht antreibbares Maschinenelement zur Bearbeitung eines Werkstücks. Beispielsweise ist das Maschinenelement als Schneidwerkzeug zur drehenden Bearbeitung eines Werkstücks ausgebildet. Bei der drehenden Bearbeitung dreht sich das Werkstück zusammen mit dem Spannfutter um eine Drehachse, während das Werkzeug am drehenden Werkstück entlang oder radial zu diesem bewegt wird. Die Verfahrbewegung des Werkzeugs wird ausschließlich durch eine Verfahrbewegung des Revolverkopfs bewirkt. Der am Werkzeugplatz des Drehwerkzeugs vorgesehene Antrieb wird für die drehende Bearbeitung nicht benötigt. Folglich ist im Falle der drehenden Bearbeitung eine Nutzung dieses ungenutzten Antriebs zum Antreiben der Hochdruckpumpe möglich. Das Gleiche gilt für den Fall, das das Maschinenelement als Spüllanze ausgebildet ist. Auch hier wird der am Werkzeugplatz vorgesehene Antrieb nicht für die Werkstückbearbeitung mittels der Spüllanze benötigt, sondern steht der Hochdruckpumpe zur Verfügung.

Ein Betrieb der Hochdruckpumpe und damit eine Bearbeitung eines Werkstücks unter hohem Kühlmitteldruck kann also nur bei drehender Bearbeitung des Werkstücks oder bei einer Werkstückbearbeitung mittels der Spüllanze erfolgen.

Ebenfalls bevorzugt ist eine Weiterbildung der erfindungsgemäßen Drehmaschine bei der ein Filtersystem vorgesehen ist, das einen Filtergrad von ≤ 50 µm, bevorzugt ≤ 20 µm, besonders bevorzugt ≤ 10 µm aufweist. Beispielsweise kommt eine handelsübliche Hochdruckpumpe zum Einsatz, die für einen störungsfreien Betrieb besondere Anforderungen an den Filtergrad des verwendeten Kühlmittels stellt. Beispielsweise fordert der Hersteller einer Hochdruckpumpe einen Filtergrad von ≤ 10 µm. Ein auf diesen Filtergrad abgestimmtes Filtersystem erhöht die Lebensdauer der Hochdruckpumpe und garantiert einen störungsfreien Betrieb derselben.

Die Erfindung wird nachfolgend anhand von einer in den Figuren dargestellten bevorzugten Ausführungsform näher erläutert.
- Figur 1: eine bekannte CNC-Drehmaschine;
- Figur 2: einen Werkzeugplatz einer bekannten CNC-Drehmaschine;
- Figur 3: einen Detailbereich eines erfindungsgemäßen Revolverkopfs mit einer Hochdruckpumpe.

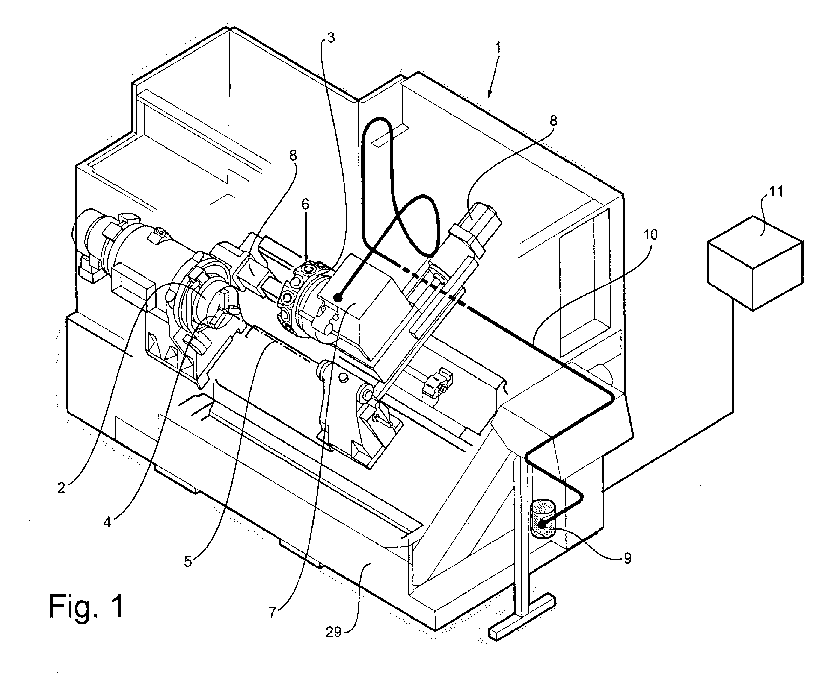

Fig. 1 zeigt eine aus dem Stand der Technik bekannte CNC-Drehmaschine 1 mit einem rotierbaren Spannfutter 2 und einem Revolverkopf 3. Das Spannfutter 2 weist Spannbacken 4 auf, mittels derer ein zu bearbeitendes Werkstück fest eingespannt wird. Das Spannfutter 2 ist um eine Drehachse 5 drehbar, so dass eingespannte Werkstücke um die Drehachse 5 gedreht werden können.

Der Revolverkopf 3 weist mehrere Werkzeugplätze 6 auf, an denen Werkzeuge zur Bearbeitung des Werkstücks befestigt werden können. Jeweils ein Werkzeug wird für die Bearbeitung eines Werkstücks ausgewählt und über eine zentrale Antriebseinheit 7 der CNC-Drehmaschine 1 angetrieben. Alle anderen auf den übrigen Werkzeugplätzen 6 angeordneten Werkzeuge stehen dabei still. Ein Stellmotor 8 ermöglicht ein Verschieben des Revolverkopfes 3 und damit auch ein Verschieben der Werkzeuge relativ zu dem Spannfutter 2 bzw. zu dem darin eingespannten Werkstück. Zur Kühlung der Werkzeuge bei der Werkstückbearbeitung ist eine Niederdruckpumpe 9 vorgesehen, die Kühlmittel aus einem Reservoir 29 über eine Kühlmittelleitung 10 zu dem Revolverkopf 3 fördert.

Die CNC-Drehmaschine 1 umfasst weiter eine Maschinensteuerung 11, die unter anderem zur Regelung der Drehbewegung des Spannfutters 2, zur Regelung der Antriebseinheit 7 und zur Ansteuerung des Stellmotors 8 dient.

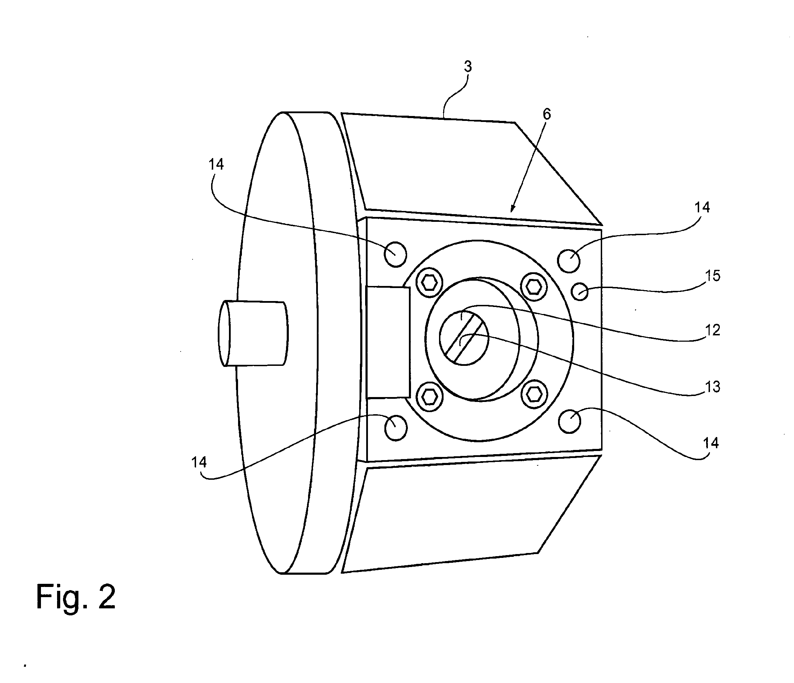

Fig. 2 zeigt einen einzelnen Werkzeugplatz 6 des Revolverkopfes 3 aus Fig. 1 im Detail. Der Werkzeugplatz ist als BMT-Aufnahme 6 (Aufnahme) ausgebildet, an der ein als rotierende Welle 12 ausgeführter Antrieb vorgesehen ist. Der in Fig. 2 gezeigte Werkzeugplatz 6 bzw. ein evtl. auf dem Werkzeugplatz 6 montiertes Werkzeug ist für die Werkstückbearbeitung ausgewählt. Die rotierende Welle 12 ist dauerhaft mit der Antriebseinheit 7 (Fig. 1) gekoppelt und über diese angetrieben. Soll ein zweiter Werkzeugplatz bzw. ein darauf montiertes zweites Werkzeug zur Werkstückbearbeitung ausgewählt werden, rotiert der Revolverkopf 3 relativ zu der Welle 12. Die Welle 12 ist ortsfest angeordnet und dient an dem zweiten Werkzeugplatz als Antrieb für das darauf angeordnete zweite Werkzeug.

Wie in Fig. 2 dargestellt, weist die Welle 12 an ihrem der Aufnahme 6 zugewandten Ende eine Ausnehmung 13 auf. Die Ausnehmung 13 ist derart ausgebildet, dass ein in der Aufnahme 6 befestigtes Werkzeug in die Ausnehmung 13 eingreift, so dass eine formschlüssige Verbindung zwischen der Welle 12 und dem anzutreibenden Werkzeug besteht. Das Werkzeug wird dann über die rotatorische Bewegung der Welle 12 angetrieben. Als Werkzeuge kommen beispielsweise Bohrer oder Fräsköpfe zum Einsatz, die über Steilkegel, Morsekegel oder sonstige Spannvorrichtungen in der Aufnahme 6 befestigt sind.

Zur Befestigung des Werkzeugs in der Aufnahme 6 sind Gewindebohrungen 14 vorgesehen, in die Befestigungsmittel, wie beispielsweise Schrauben und Gewindebolzen, eingreifen können. Die Aufnahme 6 umfasst weiter eine Kühlmittelzufuhr, die als Öffnung 15 ausgebildet ist. Diese ist mit der Kühlmittelleitung 10 (Fig. 1) verbunden, sodass während des Betriebs der CNC-Drehmaschine 1 Kühlmittel zu Aufnahme 6 gefördert wird. Um das Kühlmittel von der Öffnung 15 zu dem zu kühlenden Werkzeug zu leiten, ist beispielsweise ein Rohr oder eine anderweitige Leitung, die zum Führen von Kühlmittel geeignet ist, an die Öffnung 15 angeschlossen. Es versteht sich, dass eine Leitung zumindest teilweise auch als Kanal in einer Spannvorrichtung ausgebildet sein kann.

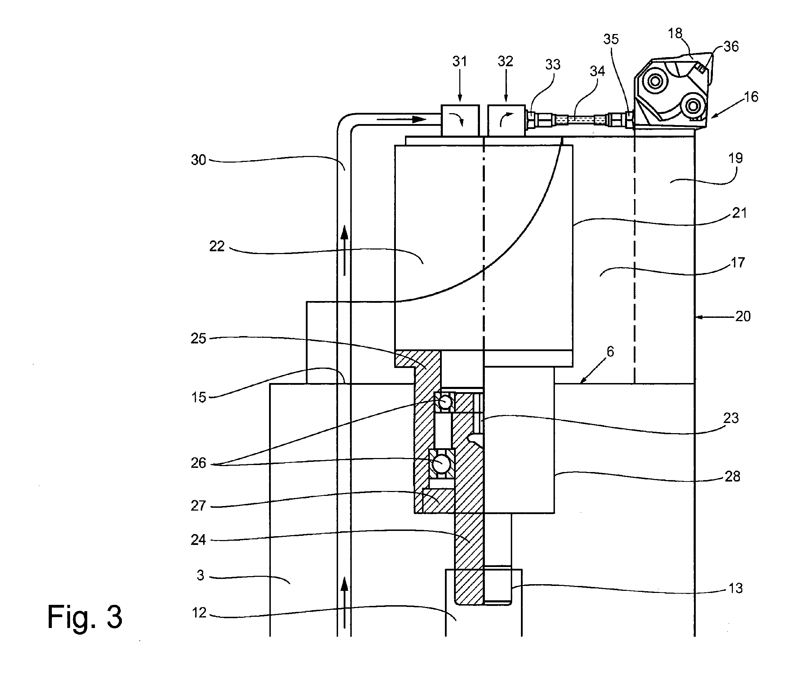

Fig. 3 zeigt einen Ausschnitt eines erfindungsgemäßen Revolverkopfs 3 mit einem als Schneidwerkzeug ausgebildetem Maschinenelement. Das Schneidwerkzeug ist als Drehwerkzeug 16 ausgeführt, das über einen Grundhalter 17 an einer BMT-Aufnahme 6 befestigt ist.

Das Drehwerkzeug 16 umfasst eine Schneidplatte 18, die von einem Werkzeughalter 19 gehalten wird. Der Grundhalter 17 umfasst eine Halterung 20, in der das Drehwerkzeug 16 befestigt ist. Selbstverständlich kann die Schneidplatte 18 auch mittels anderer aus dem Stand der Technik bekannter Mittel, beispielsweise durch Flachbettungseinsätze, mit dem Grundhalter 17 verbunden werden.

Der Grundhalter 17 weist eine Aussparung 21 auf, in der eine handelsübliche Hochdruckpumpe 22 angeordnet ist. Die Hochdruckpumpe 22 ragt durch die Aussparung 21 hindurch in die Aufnahme 6 hinein. Die Aussparung 21 durchdringt den Grundhalter 17 in Richtung der Aufnahme 6 vollkommen und ist an die Außenabmessungen der Hochdruckpumpe 22 angepasst. Es versteht sich, dass die Aussparung 21 als Bohrung oder Ausfräsung ausgebildet sein kann.

Der Antrieb der Hochdruckpumpe 22 erfolgt mittels der in der Aufnahme 6 vorgesehenen Welle 12. Um die Ausnehmung 13 der Welle 12 mit einer Antriebswelle 23 der Hochdruckpumpe 22 zu koppeln, ist eine Adapterwelle 24 vorgesehen. Diese ist an ihren Enden sowohl an die Ausnehmung 13 der Welle 12 wie auch an das freie Ende der Antriebswelle 23 der Hochdruckpumpe 22 derart angepasst, dass eine Kraftübertragung von dem als Welle 12 ausgebildetem Antrieb auf die Hochdruckpumpe 22 erfolgt. Dadurch wird eine rotatorische Antriebsbewegung der Welle 12 über die Adapterwelle 24 an die Antriebswelle 23 der Hochdruckpumpe 22 übertragen. Indem die Hochdruckpumpe 22 über die Welle 12 der Aufnahme 6 angetrieben wird, kann die von der Hochdruckpumpe 22 geförderte Menge an Kühlmittel und damit die Pumpenleistung der Hochdruckpumpe 22 über die Drehzahl der Welle 12 eingestellt werden.

Die Adapterwelle 24 ist an ihrem der Hochdruckpumpe 22 abgewandtem Ende auf die Welle 12 der Aufnahme 6 konstruktiv angepasst. Es versteht sich, dass die Adapterwelle 24 auch auf Antriebe anderer (genormter) Aufnahmen konstruktiv angepasst sein kann. Beispielsweise ist eine Verwendung der Welle 12 mit einem Antrieb einer VDI-Aufnahme denkbar.

Die Verbindung zwischen der Antriebswelle 23 der Hochdruckpumpe 22 und der Adapterwelle 24 kann beispielsweise als formschlüssige oder auch als kraftschlüssige Verbindung ausgeführt sein. Dabei können beliebige dem Fachmann bekannte Verbindungsmittel verwendet werden.

Die Adapterwelle 24 ist in einem Adapterwellengehäuse 25 gelagert. Hierfür sind Wälzlager 26 vorgesehen, die an Absätzen der Adapterwelle 24 angreifen und eine rotatorische Bewegung derselben relativ zu dem Adapterwellengehäuse 25 ermöglichen. Das Adapterwellengehäuse 25 nimmt die Hochdruckpumpe 22 an ihrem der Antriebswelle 23 zugewandten Ende auf. Das Adapterwellengehäuse 25 und die Hochdruckpumpe 22 sind miteinander verbunden, beispielsweise miteinander verschraubt. An dem der Hochdruckpumpe 22 abgewandten Ende des Adapterwellengehäuses 25 ragt die Adapterwelle 24 aus dem Adapterwellengehäuse 25 heraus. Es ist eine Wellendichtung 27 vorgesehen, die das Adapterwellengehäuse 25 auf seinem der Hochdruckpumpe 22 abgewandten Ende abdichtet. Das Adapterwellengehäuse 25 ist an seiner Außenseite zumindest teilweise zylinderförmig ausgebildet und zumindest teilweise in der Aussparung 21 angeordnet. Das Adapterwellengehäuse ist mit dem Grundhalter 17 verbunden, bevorzugt mit diesem verschraubt.

Wie aus Fig. 3 ersichtlich ist auch das Adapterwellengehäuse 25 in seinen Abmessungen konstruktiv an die Aufnahme 6 angepasst. Der Außendurchmesser des Adapterwellengehäuses 25 entspricht in seinem zylindrischen Bereich in etwa dem Innendurchmesser einer Versenkung 28 der Aufnahme 6. Das Adapterwellengehäuse 25 ist zumindest teilweise in die Versenkung 28 eingebracht und damit ebenfalls teilweise in dem Revolverkopf 3 versenkt.

Selbstverständlich können das Adapterwellengehäuse 25 und die Adapterwelle 24 auch an andere genormte Aufnahmen wie beispielsweise eine VDI-Aufnahme konstruktiv angepasst sein.

An der Öffnung 15 der Aufnahme 6 ist eine Niederdruckleitung 30 vorgesehen, die die Öffnung 15 am Revolverkopf 3 mit einem Pumpeneingang 31 der Hochdruckpumpe 22 verbindet. Die Niederdruckleitung 30 verläuft zumindest teilweise durch den Grundhalter 17. Die Niederdruckleitung 30 kann als Schlauch, Rohr oder anderweitige Leitung, die in der Lage ist, normale Drücke (bis ca. 40 bar) zu leiten, ausgebildet sein. Es versteht sich, dass eine Leitung zumindest teilweise auch als Kanal in anderen Bauteilen, die zwischen Drehwerkzeug 16 und Aufnahme 6 angeordnet sind, beispielsweise dem Grundhalter 17, realisiert werden kann.

Der Pumpenausgang 32 der Hochdruckpumpe 22 ist mit einem ersten Ende 33 einer Hochdruckleitung 34 verbunden. Ein zweites Ende 35 der Hochdruckleitung 34 ist mit Düsen 36 verbunden, die am Drehwerkzeug 16 in unmittelbarer Nähe der Schneidplatte 18 angeordnet sind. Von der Hochdruckpumpe 22 gefördertes Kühlmittel wird durch die Hochdruckleitung 34 von dem Pumpenausgang 32 zu den Düsen 36 gefördert. Die Düsen 36 richten das Kühlmittel auf die Schneidplatte 18 des Drehwerkzeugs 16 derart, dass die Schneidplatte 18 durch das Kühlmittel gekühlt wird.

Das Kühlmittel wird an der Öffnung 15 mit einem Kühlmittelduck von ca. 20 bar bereitgestellt und über die Niederdruckleitung 30 in die Hochdruckpumpe 22 geleitet. Die Hochdruckpumpe 22 erhöht dann den Kühlmitteldruck auf ca. 70 bar. Mit diesem Druck wird das Kühlmittel über die Hochdruckleitung 34 zu den Düsen 36 geführt. Es sind allerdings auch höhere Kühlmitteldrücke denkbar. Die Hockdruckleitung 34 kann als druckfester Schlauch, als Rohr oder als sonstige Leitung, die geeignet ist, Kühlmittel mit hohen Drücken zu leiten, ausgebildet sein.

Die CNC-Drehmaschine 1 weist ein Filtersystem (nicht dargestellt) auf, um das Kühlmittel zu filtern bevor es der Hochdruckpumpe 22 zugeführt wird. Das Filtersystem kann an nahezu jeder beliebigen Position an der CNC-Drehmaschine 1 angeordnet werden. Bevorzugt wird das Kühlmittel in der Niederdruckleitung 30 oder vor Zuführung zum Revolverkopf 3 in der Kühlmittelleitung 10 (Fig. 1) bereits gefiltert. Das optionale Filtersystem lässt sich in der Regel einfach nachrüsten.

## Patentansprüche

1. Hochdrucksystem zum Bereitstellen von Kühlmittel an einem Schneidwerkzeug (16), das zur Bearbeitung eines Werkstücks geeignet ist, umfassend eine Hochdruckpumpe (22) zum Bereitstellen von Kühlmittel und einen Grundhalter (17) zur Befestigung der Hochdruckpumpe (22) an einem Werkzeugplatz (6) eines Revolverkopfs (3),
wobei die Hochdruckpumpe (22) derart ausgebildet ist, dass sie mit einem Antrieb (12) an dem Werkzeugplatz (6) verbindbar ist,
**dadurch gekennzeichnet,**
**dass** der Grundhalter (17) eine Halterung (20) zur starren Befestigung des Schneidwerkzeugs (16) aufweist.

2. Revolverkopf für eine Drehmaschine, umfassend
mehrere Werkzeugplätze (6) mit jeweils einem Antrieb (12) zum Antreiben eines auf dem Werkzeugplatz (6) montierten antreibbaren Werkzeugs, ein Schneidwerkzeug (16) zum Bearbeiten eines Werkstücks, und ein Hochdrucksystem nach Anspruch 1, wobei das Schneidwerkzeug (16) über einen Grundhalter (17) an einem Werkzeugplatz (6) befestigt ist und relativ zu dem Revolverkopf unbeweglich ist, wobei das Hochdrucksystem eine Hochdruckpumpe (22) zum Bereitstellen von Kühlmittel für das Schneidwerkzeug (16) aufweist, und wobei der Antrieb (12) des dem Schneidwerkzeug (16) zugeordneten Werkzeugplatzes (6) zum Antreiben der Hochdruckpumpe (22) mit dieser verbunden ist.

3. Revolverkopf nach Anspruch 2, **dadurch gekennzeichnet, dass** der Antrieb (12) des dem Schneidwerkzeug (16) zugeordneten Werkzeugplatzes (6) über eine Adapterwelle (24) mit der Hockdruckpumpe (22) verbunden ist.

4. Revolverkopf nach einem der vorhergehenden Ansprüche, **dadurch gekennzeichnet, dass** die Hochdruckpumpe (22) an dem Werkzeugplatz (6) des Schneidwerkzeugs (16) angeordnet ist.

5. Revolverkopf nach einem der vorhergehenden Ansprüche, **dadurch gekennzeichnet, dass** die Hochdruckpumpe (22) in einer Aussparung (21) des Grundhalters (17) angeordnet ist.

6. Revolverkopf nach einem der vorhergehenden Ansprüche, **dadurch gekennzeichnet, dass** der dem Schneidwerkzeug (16) zugeordnete Werkzeugplatz (6) eine Kühlmittelzufuhr (15) aufweist, die mit einem Pumpeneingang (31) der Hochdruckpumpe (22) verbunden ist.

7. Revolverkopf nach einem der vorhergehenden Ansprüche, **dadurch gekennzeichnet, dass** ein Pumpenausgang (32) der Hochdruckpumpe (22) mit einer Hochdruckleitung (34) verbunden ist.

8. Revolverkopf nach den Ansprüchen 4 und 7, **dadurch gekennzeichnet, dass** das dem Pumpenausgang (32) der Hochdruckpumpe (22) abgewandte Ende (35) der Hochdruckleitung (34) mit Düsen (36) verbunden ist, die ausgebildet sind, das Schneidwerkzeug (16) zu kühlen.

9. Revolverkopf nach einem der vorhergehenden Ansprüche, **dadurch gekennzeichnet, dass** die Leistungsregelung der Hochdruckpumpe (22) über eine Drehzahlregelung des Antriebs (12) erfolgt, der dem Werkzeugplatz (6) des Schneidwerkzeugs (16) zugeordnet ist.

10. Drehmaschine mit einem Revolverkopf nach einem der vorhergehenden Ansprüche.

11. Drehmaschine nach Anspruch 10, **dadurch gekennzeichnet, dass** die Drehmaschine (1) weiter eine Maschinensteuerung (11) zur Regelung des Antriebs (12) jedes Werkzeugplatzes (6) umfasst.

12. Drehmaschine nach einem der Ansprüche 10 oder 11, **dadurch gekennzeichnet, dass** ein rotierbares Spannfutter (2) zum Einspannen und Drehen eines Werkstücks vorgesehen ist und der Revolverkopf (3) ein nicht antreibbares Schneidwerkzeug (16) zur Bearbeitung eines Werkstücks umfasst.

13. Drehmaschine nach einem der Ansprüche 10 bis 12, **dadurch gekennzeichnet, dass** ein Filtersystem vorgesehen ist, das einen Filtergrad von ≤ 50µm, bevorzugt ≤ 20µm, besonders bevorzugt ≤10µm aufweist.

## Claims

1. A high pressure system for providing coolant to a cutting tool (16), which is suitable for machining a workpiece, including a high pressure pump (22) for providing coolant and a base mount (17) for fastening the high pressure pump (22) to a tool station (6) of a rotary turret (3), wherein the high pressure pump (22) is constructed so that it is connectable to a drive (12) at the tool station (6), **characterised in that** the base mount (17) includes a holder (20) for rigidly fastening the cutting tool (16).

2. A rotary turret for a lathe including a plurality of tool stations (6) with respective drives (12) for driving a drivable tool mounted on the tool station (6), a cutting tool (16) for machining a workpiece and a high pressure system as claimed in Claim 1, wherein the cutting tool (16) is fastened to a tool station (6) by means of a base mount (17) and is fixed relative to the rotary turret, wherein the high pressure system includes a high pressure pump (22) for providing coolant for the cutting tool (16) and wherein the drive (12) of the tool station (6), associated with the cutting tool (16), for driving the high pressure pump (22) is connected to it.

3. A rotary turret as claimed in Claim 2, **characterised in that** the drive (12) of the tool station (6) associated with the cutting tool (16) is connected to the high pressure pump by means of an adapter shaft (24).

4. A rotary turret as claimed in one of the preceding claims, **characterised in that** the high pressure pump (22) is arranged at the tool station (6) of the cutting tool (16).

5. A rotary turret as claimed in one of the preceding claims, **characterised in that** the high pressure pump (22) is arranged in an opening (21) in the base mount (17).

6. A rotary turret as claimed in one of the preceding claims, **characterised in that** the tool station (6) associated with the cutting tool (16) includes a coolant supply (15), which is connected to a pump inlet (31) of the high pressure pump (22).

7. A rotary turret as claimed in one of the preceding claims, **characterised in that** a pump outlet (32) of the high pressure pump (22) is connected to a high pressure line (34).

8. A rotary turret as claimed in Claims 4 and 7, **characterised in that** the end (35) of the high pressure line (34) remote from the pump outlet (32) of the high pressure pump (22) is connected to nozzles (36), which are constructed to cool the cutting tool (16).

9. A rotary turret as claimed in one of the preceding claims, **characterised in that** the output control of the high pressure pump (22) is effected by means of a speed control of the drive (12), which is associated with the tool station (6) of the cutting tool (16).

10. A lathe with a rotary turret as claimed in one of the preceding claims.

11. A lathe as claimed in Claim 10, **characterised in that** the lathe (1) further includes a machine controller (11) for controlling the drive (12) of each tool station (6).

12. A lathe as claimed in one of Claims 10 or 11, **characterised in that** a rotatable chuck (2) for clamping and rotating a tool is provided and the rotary turret (3) includes a non-drivable cutting tool (16) for machining a workpiece.

13. A lathe as claimed in one of Claims 10 to 12, **characterised in that** a filter system is provided which has a filtration grade of ≤ 50µm, preferably ≤20µm, particularly preferably ≤10µm.

## Revendications

1. Système haute pression permettant un approvisionnement de liquide de refroidissement au niveau d'un outil de coupe (16), approprié pour l'usinage d'une pièce à usiner, comprenant une pompe haute pression (22) permettant un approvisionnement de liquide de refroidissement et un support principal (17) permettant un montage de la pompe haute pression (22) au niveau d'un emplacement d'outil (6) d'une tourelle revolver (3),
dans lequel la pompe haute pression (22) est réalisée de manière à pouvoir être reliée à un mécanisme d'entraînement (12) au niveau d'un emplacement d'outil (6),
**caractérisé en ce que**,
le support principal (17) présente une fixation (20) permettant un montage rigide de l'outil de coupe (16).

2. Tourelle revolver pour un tour, comprenant
plusieurs emplacements d'outil (6) avec respectivement un mécanisme d'entraînement (12) permettant un entraînement d'un outil entraînable monté sur l'emplacement d'outil (6), un outil de coupe (16) permettant un usinage d'une pièce à usiner, et un système haute pression selon la revendication 1, dans laquelle l'outil de coupe (16) est fixé au niveau d'un emplacement d'outil (6) par l'intermédiaire d'un support principal (17) et est immobile par rapport à la tourelle revolver, dans laquelle le système haute pression présente une pompe haute pression (22) permettant un approvisionnement de liquide de refroidissement pour l'outil de coupe (16), et dans lequel le mécanisme d'entraînement (12) de l'emplacement d'outil (6) affecté à l'outil de coupe (16) est relié à la pompe haute pression (22) en vue d'un entraînement de celle-ci.

3. Tourelle revolver selon la revendication 2, **caractérisée en ce que** le mécanisme d'entraînement (12) de l'emplacement d'outil (6) affecté à l'outil de coupe (16) est relié à la pompe haute pression (22) par l'intermédiaire d'un arbre adaptateur (24).

4. Tourelle revolver selon l'une quelconque des revendications précédentes, **caractérisée en ce que** la pompe haute pression (22) est agencée au niveau de l'emplacement d'outil (6) de l'outil de coupe (16).

5. Tourelle revolver selon l'une quelconque des revendications précédentes, **caractérisée en ce que** la pompe haute pression (22) est agencée dans un évidement (21) du support principal (17).

6. Tourelle revolver selon l'une quelconque des revendications précédentes, **caractérisée en ce que** l'emplacement d'outil (6) affecté à l'outil de coupe (16) présente une alimentation en liquide de refroidissement (15) qui est reliée à une entrée de pompe (31) de la pompe haute pression (22).

7. Tourelle revolver selon l'une quelconque des revendications précédentes, **caractérisée en ce qu'**une sortie de pompe (32) de la pompe haute pression (22) est reliée à une conduite haute pression (34).

8. Tourelle revolver selon les revendications 4 et 7, **caractérisée en ce que** l'extrémité (35), détournée de la sortie de pompe (32) de la pompe haute pression (22), de la conduite haute pression (34) est reliée à des buses (36) réalisées de manière à refroidir l'outil de coupe (16).

9. Tourelle revolver selon l'une quelconque des revendications précédentes, **caractérisée en ce que** le réglage de puissance de la pompe haute pression (22) se fait par l'intermédiaire d'un réglage de vitesse du mécanisme d'entraînement (12) qui est affecté à l'emplacement d'outil (6) de l'outil de coupe (16).

10. Tour présentant une tourelle revolver selon l'une quelconque des revendications précédentes.

11. Tour selon la revendication 10, **caractérisé en ce que** le tour (1) comprend en outre une commande de machine (11) permettant un réglage du mécanisme d'entraînement (12) de chaque emplacement d'outil (6).

12. Tour selon la revendication 10 ou 11, **caractérisé en ce qu'**un mandrin rotatif (2) permettant un serrage et une rotation d'une pièce à usiner est prévu et la tourelle revolver (3) comprend un outil de coupe (16) non entraînable permettant un usinage d'une pièce à usiner.

13. Tour selon l'une quelconque des revendications 10 à 12, **caractérisée en ce qu'**un système filtrant est prévu, qui présente un degré de filtration ≤ 50 µm, de manière préférée ≤ 20 µm, de manière particulièrement préférée ≤ 10 µm.
